# FASCICULE DE BREVET EUROPEEN

(11) **EP 2 070 103 B1**
(45) Date de publication et mention de la délivrance du brevet: **02.03.2011**
(21) Numéro de dépôt: 07823636.1
(22) Date de dépôt: 25.07.2007
(51) Int. Cl.: H01J 61/10, H01J 61/30, H01J 61/35, H01J 61/54, H01J 65/04, F21V 25/00

(54) **STRUCTURE LUMINEUSE ET/OU UV SENSIBLEMENT PLANE**
EINE IM WESENTLICHEN FLACHE LEUCHTENDE UND/ODER UV-STRUKTUR
SUBSTANTIALLY FLAT LUMINOUS AND/OR UV STRUCTURE

(30) Priorité: 21.08.2006 FR 0653414
(43) Date de publication de la demande: 17.06.2009
(73) Titulaire: Saint-Gobain Glass France, 92400 Courbevoie (FR)
(72) Inventeur: AUDAY, Guillaume, F-23600 Bussiere-Saint-Georges (FR); MONTGERMONT, Aude, F-60200 Compiegne (FR); ZHANG, Jingwei, F-91300 Massy (FR); DURON, Didier, F-92100 Boulogne Billancourt (FR)
(74) Mandataire: Cardin, Elise
(86) Numéro de dépôt international: PCT/FR2007/051719
(87) Numéro de publication internationale: WO 2008/023124

(56) Documents cités:
- EP-A2- 0 348 979
- EP-A2- 0 767 340
- EP-A2- 1 180 781
- CH-A- 473 354
- JP-A- 6 349 450
- JP-A- 7 288 102
- JP-A- 11 143 372
- JP-A- 2003 107 463
- US-A- 3 999 057
- US-A1- 2006 091 807
- US-B1- 6 340 866

## Description

L'invention se rapporte au domaine des structures lumineuses et/ou UV et plus particulièrement concerne une structure lumineuse (sensiblement) plane avec des première et deuxième parois diélectriques en regard délimitant un espace interne comprenant une source lumineuse et/ou UV, des première et deuxième électrodes pour la source lumineuse ou UV générant des lignes de champ électrique avec au moins une composante perpendiculaire aux première et deuxième électrodes, la première électrode au moins étant alimentée ou susceptible d'être alimentée par un signal électromagnétique haute fréquence.

Parmi les structures lumineuses planes connues figurent les lampes planes utilisables en tant que luminaire décoratif ou architectural ou servant pour le rétro éclairage d'écrans à cristaux liquides. Ces lampes planes sont typiquement constituées de deux feuilles de verre maintenues avec un faible écartement l'une par rapport à l'autre, généralement inférieur à quelques millimètres, et scellées hermétiquement de manière à renfermer un gaz sous pression réduite dans lequel une décharge électrique produit un rayonnement généralement dans le domaine ultraviolet qui excite un matériau photoluminescent qui émet alors de la lumière visible.

Le document W02004/015739A2 divulgue ainsi une lampe plane à décharge qui comprend :
- deux parois sous forme de feuilles de verre maintenues parallèles entre elles et délimitant un espace interne rempli de gaz, et dont les faces tournées vers l'espace interne sont revêtues d'un matériau photoluminescent excité par le gaz plasmagène,
- deux électrodes sous forme de couche uniforme recouvrant respectivement les deux parois à l'extérieur de l'espace interne, ces électrodes générant ainsi des lignes de champ électrique avec au moins une composante perpendiculaire aux électrodes,
- deux feuilles de verre assemblées aux parois par l'intermédiaire de films plastiques intercalaires.

Pour alimenter ce type de lampe plane, au moins l'une des électrodes est à un potentiel V0 typiquement de l'ordre du kV et à haute fréquence, typiquement de l'ordre de 1 à 100 kHz, et par exemple avec une puissance d'environ 100 W.

Des structures lumineuses planes sont aussi divulguées par JP07-288102, JP06-349450, JP2003107463, EP1180781, CH473354, US3999057, EP0767340, EP0348979 et US6340866.

La demanderesse a constaté que la capacité d'isolation de l'ensemble verre de feuilletage et film plastique n'était pas satisfaisante. La demanderesse a constaté en particulier un problème de sécurité de cette lampe plane de l'art antérieur dès que l'on approche un corps bon conducteur, notamment métallique, du verre feuilleté en relation avec l'électrode alimentée en haute fréquence.

Aussi, la présente invention a pour objet de proposer une structure lumineuse, plane ou sensiblement plane, à alimentation haute fréquence et à champ électrique à composante verticale, qui soit sécurisée tout en évitant d'augmenter considérablement la puissance consommée dans la structure.

A cet effet, la présente invention propose une structure lumineuse ou UV selon la revendication 1.

Cette structure lumineuse ou UV selon l'invention comporte en outre, en recouvrement extérieur de la première électrode, un système de sécurité électrique qui comprend un conducteur électrique dit de protection, séparé de la première électrode par un diélectrique , dit intercalaire, l'intercalaire étant sensiblement plan et de capacité C donnée, ledit conducteur de protection étant relié à une alimentation électrique avec une fréquence f à eventuellement avec un potentiel V ajustés de sorte que le courant de fuite extérieur, en valeur pic, est inférieur ou égal à 2 mA si f est nulle, ou inférieur ou égal à 0,7 mA, si f est non nulle.

Le diélectrique intercalaire et/ou le conducteur de protection et/ou l'une des électrodes est/sont choisi(s) de sorte que la puissance consommée P_{d} aux bornes du diélectrique intercalaire soit inférieure ou égale à 0,35 fois la puissance P fournie par l'alimentation électrique, au moins à une température de surface de la structure choisie entre 25°C et 60°C.

P_{d} est donnée par la formule suivante : *P_{d} =* 2π*f*₀*CU*² sin(δ) dans laquelle δ est l'angle de pertes du diélectrique intercalaire, U est la tension aux bornes du diélectrique intercalaire.

Dans la structure de l'art antérieur, le courant de fuite est élevé car il est proportionnel au rapport surface active de la première électrode/surface du corps métallique, à la haute fréquence, à un potentiel élevé et à la puissance consommée par la lampe.

Dans la structure selon l'invention, le courant de fuite est limité par un ajustement de la fréquence f et/ou du potentiel V du conducteur électrique pour permettre de sécuriser la structure lumineuse ou UV.

Le potentiel V, la fréquence f ou le produit V.f à appliquer au conducteur électrique selon l'invention sont d'autant plus limités que le rapport des surfaces est grand et généralement que la taille de la lampe est importante.

Pour la mesure du courant de fuite, on choisira un corps métallique de préférence de surface égale à celle de la première électrode (condition la plus drastique). Pour une surface d'objet métallique inférieure à celle de l'électrode, le courant est réduit proportionnellement.

La puissance peut être de préférence de l'ordre de 100 W, si V est une tension alternative, ou même jusqu'à 1 kW, si V est une tension continue voire nulle.

La structure peut être de taille supérieure ou égale à 0,1 m².

Le diélectrique entre la première électrode et le conducteur électrique de protection est un intercalaire capacitif introduisant une capacité C en parallèle à la capacité C' donnée de la lampe avant la décharge, C' étant définie par le ou les diélectriques entre les deux électrodes (gaz, paroi(s) diélectrique(s) ....). L'intercalaire influe sur l'alimentation de la lampe et donc ses performances. Il consomme notamment de l'énergie variant en outre avec la température de la lampe. Aussi, il est nécessaire de limiter P_{d}, de préférence en réduisant le produit C. sinδ.

De préférence P_{d} peut être inférieure ou égale à 0,25P voire 0,15P pour ladite température de surface voire pour une gamme de températures de surface entre 30°C et 60°C, encore plus préférentiellement entre 20 et 80°C, voire entre - 10°C et 100°C (conditions extrêmes d'utilisation).

L'intercalaire capacitif défini par son angle de pertes δ et introduisant une capacité C proportionnelle à la permittivité relative εᵣ. Pour limiter le produit C. sinδ, le diélectrique intercalaire peut être choisi avec des propriétés électriques adaptées c'est-à-dire une valeur tanδ limitée et/ou une permittivité relative εᵣ limitée et de préférence constante(s) avec la température.

Pour ce faire, on peut choisir :
- une valeur de tanδ inférieure ou égale à 0,06 voire 0,03 pour une fréquence f₀ entre 1 et 100 kHz et à ladite température de surface, voire pour une gamme de températures de surface entre 30°C et 60°C, encore plus préférentiellement entre 20°C et 80°C, voire entre 0°C et 100°C.
- et/ou une permittivité relative εᵣ inférieure ou égale à 4,5 voire 4 ou même 3,5 pour une fréquence f₀ entre 1 et 100 kHz à ladite température de surface, voire pour une gamme de températures de surface entre 30°C et 60°C, encore plus préférentiellement entre 20°C et 80°C, voire entre 0°C et 100°C.

En effet, lorsque la température de la structure augmente, la puissance P_{d} augmente également car l'angle de pertes δ grandit. Il est ainsi avantageux d'utiliser un diélectrique intercalaire évoluant peu, d'un point de vue électrique, avec la température surtout entre 30°C et 80°C.

Pour réduire la capacité C, on peut aussi, de manière alternative et de préférence cumulative aux choix des paramètres électriques précités:
- diminuer la surface du conducteur électrique de protection et/ou de l'une ou des électrodes, en choisissant par exemple une grille ou des fils conducteurs parallèles entre eux ou des pistes parallèles ou organisées en grille ou encore tout autre réseau conducteur, et/ou diminuer la surface du diélectrique intercalaire, ou tout particulièrement la ou les surfaces en vis-à-vis du conducteur électrique de protection, des électrodes, du diélectrique intercalaire,
- et/ou éventuellement augmenter l'épaisseur du diélectrique intercalaire.

Le diélectrique peut présenter d'autres propriétés avantageuses :
- des propriétés thermo-mécaniques satisfaisantes (feuilletage possible, bonne tenue en température...),
- des propriétés optiques satisfaisantes (transparence...),
- une faible densité (pour limiter le poids total de la structure),
- un coût raisonnable.

De préférence, le diélectrique peut comprendre ou être constitué de l'un des éléments suivants:
- un élément verrier, telle qu'une feuille de verre qui peut être l'une des parois, qui peut être au choix :
   - un verre silicosodocalcique épais, d'épaisseur minimale de 7 mm environ en configuration pleine surface,
   - un verre silicosodocalcique avec moins de 0,05% de Fe III ou de Fe₂O₃, notamment à partir de 6 mm d'épaisseur en configuration pleine surface,
   - un verre borosilicate, notamment à partir de 5 mm d'épaisseur en configuration pleine surface,
   - une silice ou un quartz notamment à partir de 3 mm d'épaisseur en configuration pleine surface,
- un film en matériau polymère, par exemple :
   - un polyéthylène téréphtalate (PET), un polyvinyl butyral (PVB), un polyuréthane (PU), du polyéthylène (PE), du polyéthylène naphtalate (PEN) ou du polychlorure de vinyle (PVC), des acrylates comme le polyméthacrylate de méthyle (PMMA) ces matériaux ayant une épaisseur minimale de 5 mm en configuration pleine surface (c'est-à-dire recouvrant sensiblement entièrement la face principale associée, par exemple au moins 80% de cette face),
   - ou, tout particulièrement, un éthylène-vinyl acétate (EVA), ayant une épaisseur minimale de 3 mm en configuration pleine surface, ou un polycarbonate (PC), ayant notamment une épaisseur minimale de 2 mm en configuration pleine surface,
- un gaz tel que de l'air, d'épaisseur minimale 1 mm, ou un gaz neutre d'épaisseur minimale de 2 mm tel que l'argon ou le xénon de préférence à pression élevée pour être difficilement ionisable, ou encore tel que de l'azote,

Le diélectrique intercalaire peut être composite. Il peut comprendre ou être constitué d'un empilement de plusieurs des éléments précités avec de préférence des épaisseurs inférieures aux épaisseurs minimales éventuellement proposées, tout particulièrement :
- au moins deux desdits films de polymère notamment un EVA et un PC,
- un gaz et au moins un film de polymère, notamment l'EVA et/ou le PC,
- un gaz et ladite feuille de verre de préférence plus mince par exemple d'épaisseur inférieure ou égale à 4 ou 3 mm pour un silicosodocalcique,

On peut aussi envisager de réaliser un diélectrique intercalaire avec des ouvertures (par exemple des trous traversants) ou étant même sous forme discontinue, notamment une pluralité de bandes de préférence parallèles, équidistantes et régulièrement réparties ou de tronçons de tout autre forme. Il peu s'agir de l'une des feuilles de verre précitées et/ou de l'un ou les films de polymères précités (PVB, PU, PET, EVA, PEN, PVC, PC, PMMA etc) avec une épaisseur de préférence inférieure à l'épaisseur minimale éventuellement proposée.

L'invention s'applique à toute structure lumineuse et/ou UV alimentée en haute fréquence et avec un champ E à composante verticale (au moins deux électrodes non coplanaires), de préférence tout type de source lumineuse à décharge c'est-à-dire avec un gaz plasmagène émettant dans le visible et/ou l'UV, ou avec un luminophore dans le visible excité par un gaz plasmagène.

La structure peut être une lampe (UV) à éclairage monodirectionnel et/ou bidirectionnel, une lampe pour la décoration, pour un rétroéclairage d'écrans d'affichage (à cristaux liquides, télévision, moniteur..).

Un éclairage monodirectionnel est utile par exemple pour des dalles éclairantes ou pour le rétroéclairage d'écran LCD.

En outre, la structure lumineuse dans le visible peut faire partie intégrante d'un double vitrage en remplacement d'un des verres du double vitrage ou en étant associée, par exemple incorporée, au double vitrage.

Naturellement, pour un éclairage bidirectionnel, tous les éléments orientés plus à l'extérieur que la source lumineuse de la structure sont, sur une partie commune, sensiblement transparents ou globalement transparents au(x) rayonnement(s) visible(s) et/ou dans l'UV (par exemple sous forme d'un arrangement de motifs absorbants ou réfléchissants répartis pour laisser passer entre eux suffisamment la lumière et/ou l'UV émis).

Dans le domaine du visible, l'invention vise par exemple la réalisation d'éléments architecturaux ou décoratifs éclairants et/ou à fonction d'affichage (éléments signalétiques, logo ou marque lumineux), tels que des luminaires notamment plans, des parois lumineuses notamment suspendues, des dalles lumineuses...

La structure choisie lumineuse forme une fenêtre éclairante de bâtiment ou de moyens de locomotion notamment une fenêtre de train, un hublot de cabine de bateau ou d'avions, un toit, une vitre latérale une lunette arrière ou de pare-brise de véhicules industriels, un vitrage, une cloison interne entre des pièces ou entre deux compartiments de moyens de locomotion terrestres, aériens ou maritimes, un vitrine, un mobilier urbain, une façade de meuble.

Un matériau diélectrique transmettant un rayonnement UV (matériau pour l'une ou les parois et/ou le diélectrique intercalaire et/ou le diélectrique couvrant) peut être choisi de préférence parmi le quartz, la silice, le fluorure de magnésium (MgF₂) ou de calcium (CaF₂), un verre borosilicate, un verre avec moins de 0,05% de Fe₂O₃.

A titre d'exemples pour des épaisseurs de 3 mm :
- les fluorures de magnésium ou de calcium transmettent à plus de 80% voire 90% sur toute la gamme des UVs c'est-à-dire les UVA (entre 315 et 380 nm), les UVB (entre 280 et 315 nm), les UVC (entre 200 et 280 nm), ou les VUV (entre environ 10 et 200 nm),
- le quartz et certaines silices haute pureté transmettent à plus de 80% voire 90% sur toute la gamme des UVA, UVB et UVC,
- le verre borosilicate, comme le borofloat de Schott, transmet à plus de 70% sur toute la gamme des UVA,
- les verres silicosodocalcique avec moins de 0,05% de Fe III ou de Fe₂O₃, notamment le verre Diamant de Saint-Gobain, le verre Optiwhite de Pilkington, le verre B270 de Schott, transmettent à plus de 70% voire 80% sur toute la gamme des UVA.

Toutefois, un verre silicosodocalcique, tel que le verre Planilux vendu par la société Saint-Gobain Glass, présente une transmission supérieure à 80% au delà de 360 nm ce qui peut suffire pour certaines réalisations et certaines applications.

Dans la structure de lampe plane selon l'invention, la pression de gaz dans l'espace interne peut être de l'ordre de 0,05 à 1 bar. On utilise un gaz ou un mélange de gaz, par exemple un gaz émettant de manière efficace ledit rayonnement UV notamment le xénon, ou le mercure ou les halogènes et un gaz facilement ionisable susceptible de constituer un plasma (gaz plasmagène) comme un gaz rare tel que le néon, le xénon ou l'argon ou encore l'hélium, ou les halogènes, ou encore l'air ou l'azote.

Le taux d'halogène (en mélange avec un ou des gaz rares) est choisi inférieur à 10% par exemple 4%. On peut aussi utiliser des composés halogénés. Les gaz rares et les halogènes présentent l'avantage d'être insensibles aux conditions climatiques.

Le tableau 1 ci-après indique les pics de rayonnement des gaz émetteurs d'UV particulièrement efficaces.

| Gaz émetteur(s) d'UV | Pic(s) (nm) |
|---|---|
| Xe | 172 |
| F₂ | 158 |
| Br₂ | 269 |
| C | 259 |
| I₂ | 342 |
| XeI /KrI | 253 |
| ArBr / KrBr / XeBr | 308 / 207 / 283 |
| ArF / KrF / XeF | 351 / 249 / 351 |
| ArCl / KrCl / XeCl | 351 / 222 / 308 |
| Hg | 185, 254, 310, 366 |

Tableau 1

La lampe UV telle que décrite précédemment peut être utilisée tant dans le domaine industriel par exemple pour l'esthétique, le biomédical, l'électronique ou pour l'alimentaire que dans le domaine domestique, par exemple pour la décontamination d'eau du robinet, d'eau potable de piscine, d'air, le séchage UV, la polymérisation.

En choisissant un rayonnement dans l'UVA voire dans l'UVB, la lampe UV telle que décrite précédemment peut être utilisée :
- comme lampe à bronzer (notamment 99,3% dans l'UVA et 0,7% dans l'UVB selon les normes en vigueur),
- pour les traitements dermatologiques (notamment, un rayonnement dans l'UVA à 308 nm),
- pour les processus d'activation photochimique, par exemple pour une polymérisation, notamment de colles, ou une réticulation ou pour le séchage de papier,
- pour l'activation de matière fluorescente, telle que l'éthidium bromide utilisée en gel, pour des analyses d'acides nucléiques ou de protéines,
- pour l'activation d'un matériau photocatalytique par exemple pour réduire les odeurs dans un réfrigérateur ou les saletés.

En choisissant un rayonnement dans l'UVB, la lampe sert pour favoriser la formation de vitamine D sur la peau.

En choisissant un rayonnement dans l'UVC, la lampe UV telle que décrite précédemment peut être utilisée pour la désinfection/stérilisation d'air, d'eau ou de surfaces par effet germicide, notamment entre 250 nm et 260 nm.

En choisissant un rayonnement dans l'UVC lointain ou de préférence dans le VUV pour la production d'ozone, la lampe UV telle que décrite précédemment sert notamment pour le traitement de surfaces, en particulier avant dépôt de couches actives pour l'électronique, l'informatique, l'optique, les semi-conducteurs ...

La lampe UV peut être intégrée par exemple dans un équipement électroménager tel que réfrigérateur, tablette de cuisine.

La lampe UV peut prendre des dimensions de l'ordre de celles atteintes actuellement avec les tubes fluorescents, ou bien supérieures, par exemple d'au moins 0,1 voire 1 m².

De préférence, le facteur de transmission de la lampe selon l'invention autour du pic dudit rayonnement visible ou UV est supérieur ou égal à 50%, encore plus préférentiellement supérieur ou égal à 70%, et même supérieur ou égal à 80%.

Dans une configuration de lampe UV avec une seule face d'un élément transmettant les UV, l'autre paroi peut être opaque, par exemple une vitrocéramique, voire être un diélectrique non verrier, de préférence avec un coefficient de dilatation voisin.

La structure peut comprendre un matériau réfléchissant le rayonnement UV ou visible couvrant partiellement ou entièrement une face interne ou externe d'une des parois, par exemple en aluminium ou en alumine. L'une des électrodes peut être en ledit matériau réfléchissant. Ce matériau peut aussi protéger d'un rayonnement UV tout matériau polymère présent dans la structure, évitant ainsi son vieillissement, son jaunissement.

Lorsque les électrodes sont sur les faces principales internes, le diélectrique intercalaire peut comprendre ou être l'une des parois.

Les première et deuxième électrodes peuvent être alternativement au moins partiellement dans les première et deuxième parois ou sur leurs faces principales externes, ceci tout particulièrement pour une structure avec des parois en verre silicosodocalcique classique. On conserve ainsi un plus large choix pour le diélectrique intercalaire.

Pour le montage, on placera la première électrode de préférence du côté le moins accessible, par exemple côté sol pour une dalle.

Le conducteur électrique de protection peut être une couche continue ou, notamment pour diminuer C, être une couche discontinue (en bandes par exemple) ou être une grille ou des fils.

Dans un mode de réalisation, le potentiel V est à la masse.

Ainsi la structure est parfaitement isolée, le conducteur électrique de protection faisant office de blindage : le courant de fuite est nul.

De préférence, la deuxième électrode peut être reliée à une masse et plus préférentiellement, le conducteur électrique de protection et la deuxième électrode sont reliés éventuellement à un même point du circuit d'alimentation de la source lumineuse ou UV.

Dans ce dernier mode de réalisation, le conducteur électrique de protection est par exemple une couche déposée sur le diélectrique intercalaire (éventuellement l'une des parois si les électrodes sont internes), pour une compacité optimale et une simplicité de fabrication ; cette couche peut être protégée des rayures par un film et/ou par un contre verre de feuilletage ce qui permet aussi d'éviter l'arrachement du conducteur.

Si les électrodes sont externes, le conducteur électrique de protection peut être aussi une couche déposée sur une face interne ou externe d'un substrat diélectrique extérieur additionnel par exemple un contre verre de feuilletage pour une solidité renforcée.

Si les électrodes sont sur les faces principales internes, une feuille de verre armé peut inclure le conducteur électrique de protection, sous forme de grille. Une telle structure reste compacte et solide.

En variante, le potentiel V peut aussi être continu, par exemple égal à 12 V, 24 V, 48 V, et en particulier sans limite de valeurs si l'on place un isolant de type verre dessus.

Dans un mode de réalisation, les électrodes sont disposées sur les faces externes et le système de protection électrique comprend un autre diélectrique qui est couvrant (autre que l'air) et situé au-dessus du conducteur électrique de protection, et le potentiel V est inférieur ou égal à 400 V, de préférence inférieur ou égal à 220 V, encore plus préférablement inférieur ou égal à 110 V et/ou la fréquence f est inférieure ou égale à 100 Hz, de préférence inférieure ou égale à 60 et encore plus préférentiellement inférieure ou égale à 50 Hz.

La deuxième électrode est en outre à un potentiel et une fréquence sensiblement identiques pour faciliter la réalisation.

Le potentiel V est de préférence inférieur ou égal à 220 V et la fréquence f est de préférence inférieure ou égale à 50 Hz.

Ce diélectrique couvrant peut comprendre une feuille de verre de préférence d'épaisseur inférieure ou égale à 4 mm, pour éviter une surépaisseur et/ou un surpoids et en outre pour des raisons de coût.

Naturellement, plus l'épaisseur du diélectrique couvrant est faible, plus le potentiel V et/ou la fréquence f sont à limiter.

La deuxième électrode pouvant aussi être alimentée ou étant susceptible d'être alimentée par un signal haute fréquence, la structure lumineuse peut de préférence comporter un autre système de sécurité électrique, par exemple similaire au système de sécurité électrique décrit précédemment. Dans cette configuration, le diélectrique intercalaire est dédoublé, c'est-à-dire composé de deux parties chacune en recouvrement extérieur d'une électrode distincte. La puissance consommée P_{d} correspond alors la somme des puissances aux bornes des deux parties.

Les deux parties intercalaires peuvent être de préférence similaires ou identiques (matériaux, épaisseurs, forme), notamment les éléments précités (feuille de verre, film de polymère, gaz, ou leurs combinaisons).

En outre, le système de protection électrique peut faire partie d'un dispositif électrocommandable, de préférence à propriétés optiques variables, tel qu'un dispositif électrochrome ou un dispositif à surface réfléchissante ou transparente commutable.

Par ailleurs, l'une ou les électrodes (et/ou le ou les conducteurs électriques de protection) peuvent être à base d'un matériau transmettant un rayonnement UV.

Un matériau électroconducteur transmettant un rayonnement UV peut être une couche très mince d'or, par exemple de l'ordre de 10 nm, ou de métaux alcalins tels que potassium, rubidium, césium, lithium ou potassium par exemple de 0,1 à 1 µm, ou encore être en un alliage par exemple avec 25% sodium et 75% de potassium.

Les électrodes (et/ou le ou les conducteurs électriques de protection) peuvent être sous forme de couches. Les électrodes peuvent recouvrir tout ou partie des faces internes ou externes en regard des parois. Il est possible de ne munir que certaines aires de la surface d'une ou des parois afin de créer sur une même surface des zones lumineuses prédéfinies.

Ces couches peuvent être constituées de tout matériau conducteur susceptible d'être mis sous forme d'un élément plan qui laisse passer la lumière ou l'UV, notamment qui peut être déposé en couche mince sur du verre ou sur un film de matière plastique tel que du PET. On peut préférer former un revêtement à partir d'un oxyde métallique conducteur ou présentant des lacunes électroniques, tel que l'oxyde d'étain dopé au fluor ou l'oxyde mixte d'indium et d'étain.

Les électrodes peuvent être des bandes linéaires, ou être de formes plus complexes, non linéaires, par exemple coudées, en V, ondulées, en zigzag, l'espacement entre électrodes étant maintenu sensiblement constant.

Les électrodes en bandes peuvent être pleines notamment formées à partir de fils conducteurs jointifs (parallèles ou en tresse, etc) ou d'un ruban (en cuivre, à coller..) ou à partir d'un revêtement déposé par tous moyens connus de l'homme du métier tels que des dépôts par voie liquide, dépôts sous vide (pulvérisation magnétron, évaporation), par pyrolyse (voie poudre ou gazeuse) ou par sérigraphie.

Pour former des bandes, en particulier, il est possible d'employer des systèmes de masquage pour obtenir directement la répartition recherchée, ou encore, de graver un revêtement uniforme par ablation laser, par gravure chimique ou mécanique.

Par exemple, les couches peuvent être sous forme d'un réseau de bandes parallèles pleines ou organisées en grille, de largeur de bande comprise entre 3 et 15 mm, et un espace non conducteur entre deux bandes voisines, de largeur supérieure à la largeur des bandes. Ces bandes peuvent être décalées de 180° de façon à éviter le vis-à-vis entre deux bandes conductrices opposées des deux parois. Cela permet avantageusement de réduire la capacité effective des parois, favorisant l'alimentation de la structure et son efficacité en lumen/W.

Les électrodes (et/ou le ou les conducteurs électriques de protection) peuvent être sous forme de grilles de fils par exemple incorporées au moins partiellement dans les parois respectives ou dans des diélectriques extérieurs.

Les électrodes peuvent être enfin sous forme de fils parallèles par exemple incorporés au moins partiellement dans les parois ou dans des diélectriques extérieurs.

Comme matériau d'électrode non transparent on peut utiliser par exemple un matériau métallique comme du tungstène, du cuivre ou du nickel.

L'une ou les électrodes (et/ou le ou les conducteurs électriques de protection) peuvent être adaptées pour permettre une transmission globale audit rayonnement UV ou visible (si le matériau est absorbant ou réfléchissant aux UV et/ou à la lumière).

Les électrodes (et/ou le ou les conducteurs électriques de protection) peuvent être des bandes sensiblement parallèles, présentant une largeur I1 et étant espacées d'une distance d1, le rapport I1 sur d1 pouvant être compris entre 10% et 50%, pour permettre une transmission globale UV ou visible d'au moins 50% du côté des électrodes, le rapport l1/d1 pouvant aussi être ajusté en fonction de la transmission de la paroi associée.

Les électrodes (et/ou le ou les conducteurs électriques de protection) peuvent aussi chacune être sous forme d'un réseau de motifs conducteurs essentiellement allongés tels que de lignes conductrices (assimilées à des bandes très fines) ou de fils conducteurs proprement dits, ces motifs pouvant être sensiblement rectilignes ou ondulés, en zigzag, etc. Ce réseau peut être défini par un pas donné dit p1 (pas minimal en cas de pluralité de pas) entre motifs et une largeur dite l2 de motifs (maximale en cas de pluralité de largeurs). Deux séries de motifs peuvent être croisées. Ce réseau peut être notamment organisé comme une grille, comme un tissu, une toile etc.

Aussi, on peut obtenir une transparence globale aux UV ou dans le visible en adaptant le rapport I1 sur d1 en fonction de la transparence souhaitée comme déjà décrit et/ou en utilisant le réseau des motifs conducteurs et en adaptant, en fonction de la transparence souhaitée, la largeur 12 et/ou le pas p1.

Ainsi, le rapport largeur 12 sur pas p1 peut être de préférence inférieur ou égal à 50% de préférence inférieur ou égal à 10%, encore plus préférentiellement inférieur ou égal à 1%.

Par exemple, le pas p1 peut être compris entre 5 µm et 2 cm, de préférence entre 50 µm et 1,5 cm, encore plus préférentiellement 100 µ.m et 1 cm, et la largeur 12 peut être entre 1 µm et 1 mm, de préférence entre 10 et 50 µm.

A titre d'exemples, on peut utiliser un réseau conducteur (en grille etc) sur un verre ou encore sur une feuille plastique par exemple de type PET avec un pas p1 entre 100 µm et 300 µm, et une largeur 12 de 10 à 20 µm ou encore un réseau de fils conducteurs intégrés au moins en partie dans un intercalaire de feuilletage, avec un pas p1 entre 1 et 10 mm, notamment 3 mm, et une largeur 12 entre 10 et 50 µm, notamment entre 20 et 30 µm.

Il peut être en outre avantageux d'incorporer dans la structure un revêtement ayant une fonctionnalité donnée. Il peut s'agir d'un revêtement à fonction de blocage des rayonnements de longueur d'onde dans l'infrarouge (utilisant par exemple une ou plusieurs couches d'argent entourées de couches en diélectrique, ou des couches en nitrures comme TiN ou ZrN ou en oxydes métalliques ou en acier ou en alliage Ni-Cr), à fonction bas-émissive (par exemple en oxyde de métal dopé comme SnO2 :F ou oxyde d'indium dopé à l'étain ITO ou une ou plusieurs couches d'argent), anti-buée (à l'aide d'une couche hydrophile), anti-salissures (revêtement photocatalytique comprenant du TiO₂ au moins partiellement cristallisé sous forme anatase), ou encore un empilement anti-reflet du type par exemple Si₃N₄/SiO₂/Si₃N₄/SiO₂.

Le conducteur électrique de protection sous forme de couche peut d'ailleurs avoir une fonction bas-émissive ou de contrôle solaire.

Le système de protection électrique, avec ou sans son alimentation électrique, et la partie de la structure formant lampe plane avec ou sans son alimentation électrique peuvent former un ensemble monolithique, voir même être intégré c'est-à-dire avoir un élément en commun et/ou l'alimentation électrique commune.

Le système de protection électrique et la partie de la structure formant lampe plane (UV) peuvent aussi être fournis séparément, être vendus en kit et être prêts à être assemblés.

D'autres détails et caractéristiques de l'invention apparaîtront de la description détaillée qui va suivre, faite en regard des dessins annexés sur lesquels :
- la figure 1 représente une vue schématique en coupe d'une lampe plane et sécurisée conformément à l'invention ;
- les figures 2 à 7 représentent des vues schématiques en coupe d'autres formes de réalisation de lampes planes dans le visible ou l'UV et sécurisées conformément à l'invention ;
- les figures 8 à 10 montrent respectivement l'évolution de P_{d}, de tanδ et de la permittivité électrique εᵣ en fonction de la température de surface de la structure.

On précise que par un souci de clarté les différents éléments des objets représentés ne sont pas nécessairement reproduits à l'échelle.

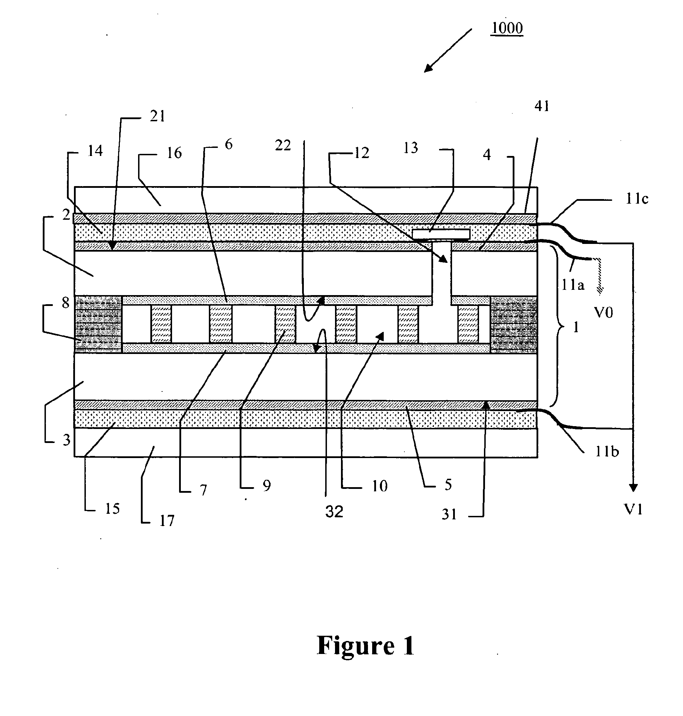

La figure 1 représente une lampe plane 1000 constituée d'une partie 1 formée par deux substrats faits de feuilles de verre 2, 3 par exemple environ 4 mm d'épaisseur, présentant une face principale externe 21, 31 ou première face, à laquelle est associé un revêtement conducteur de préférence continu et homogène 4, 5 constituant une électrode, et une face principale interne 22, 32, ou deuxième face, qui porte un revêtement de matériau photoluminescent 6, 7 par exemple transparent par exemple sous forme des particules luminophores dispersées dans une matrice inorganique par exemple à base de silicate de lithium.

Les feuilles 2, 3 sont associées avec mise en regard de leurs deuxièmes faces 22,32 portant le matériau photoluminescent 6, 7 et sont assemblées par l'intermédiaire d'une fritte de scellage 8, l'écartement entre les feuilles de verre étant imposé (à une valeur généralement inférieure à 5 mm) par des espaceurs 9 en verre disposés entre les feuilles. Ici, l'écartement est de l'ordre de 0,3 à 5 mm, par exemple de 0,4 à 2 mm.

Les espaceurs 9 peuvent avoir une forme sphérique, cylindrique, cubique ou une autre section polygonale par exemple cruciforme. Les espaceurs peuvent être revêtus, au moins sur leur surface latérale exposée à l'atmosphère de gaz à plasma, d'un luminophore identique ou différent du luminophore 6, 7.

Dans un espace dit interne 10 entre les feuilles de verre 2, 3 règne une pression réduite, en général de l'ordre du dixième d'atmosphère, d'un gaz rare tel que le xénon, éventuellement en mélange avec du néon ou de l'hélium.

Chaque électrode est directement déposée sur la face externe 21, 31 du substrat 2, 3. Chaque électrode 4, 5 est par exemple une couche d'oxyde d'étain dopée fluor.

En variante, chaque électrode peut être associée au substrat de différentes manières : elle peut être déposée sur la face externe ou interne d'un élément porteur isolant électrique, cet élément porteur étant assemblé au substrat de sorte que le revêtement soit plaqué contre la face externe 21, 31 du substrat. Cet élément peut par exemple être un film plastique de type EVA ou PVB ou plusieurs films plastiques par exemple PET, PVB et PU.

Chaque électrode peut être aussi sous forme de grille métallique intégrée dans un film de matière plastique ou même dans le substrat formant alors un verre armé ou encore sous forme de fils parallèles entre eux.

Chaque électrode peut aussi être prise en sandwich entre un premier isolant électrique et un second isolant électrique, l'ensemble étant assemblé au substrat 2,3. L'électrode peut par exemple être intercalée entre deux feuilles de matière plastique.

Une autre combinaison d'isolants électriques est la suivante : une feuille de PVB est pris comme premier isolant électrique qui servira à coller le second isolant électrique et porteur de l'électrode tel qu'une feuille de PET, l'électrode étant entre la feuille de PVB et la feuille de PET.

L'électrode 4 est reliée à une source d'alimentation électrique haute fréquence de fréquence f0 par exemple égale à 40 kHz par un clinquant souple 11a. L'électrode 4 est à un potentiel V0 de l'ordre de 1 kV et à la fréquence f0.

Plus l'épaisseur du substrat 2, 3 est faible (plus généralement l'épaisseur de diélectrique(s) séparant les électrodes), par exemple abaissée à 2 ou 1 mm, moins la tension V0 doit être élevée, donc les conditions sur V, f pour garantir l'isolation sont plus souples.

L'électrode 5, alimentée par un clinquant souple 11b, est à un potentiel V1 de l'ordre de 220 V, et une fréquence f₁ de 50 Hz.

Au-dessus de cette électrode 4, on place un diélectrique intercalaire 14 et un conducteur électrique de protection 41 alimenté électriquement par un clinquant souple 11c et relié à l'électrode 5.

Ce conducteur de protection 41 est par exemple sous forme d'une couche d'oxyde d'étain dopée fluor déposée entièrement sur la face interne d'une feuille de verre 16 par exemple de 3,85 mm d'épaisseur ou alternativement sur un support plastique épais.

Pour une surface d'électrode 4 de 0,2 m² et une puissance de 100 W, le courant de fuite mesuré en disposant un objet métallique continu de même surface sur la feuille de verre 16 de 3,85 mm d'épaisseur est d'environ 0,6 mA (valeur pic).

Le diélectrique 14 est un intercalaire de feuilletage capacitif par exemple au moins un film polymère par exemple identique au film 15 agencé contre l'électrode 5 et décrit plus loin. Pour une température de surface de 30°C, à la fréquence f₀ de 40 kHz, une surface d'électrode 4 de 0,2 m² et une puissance P de 100 W, la puissance P_{d} vaut
- environ 35 W si le film 14 est un PVB, un PU ou un PET de 5 mm d'épaisseur pour limiter la capacité C,
- environ 18 W si le film 14 est un EVA de 3,8 mm d'épaisseur,
- environ 13 W si le film 14 est un PC associé à un EVA (pour une meilleure adhésion du PC) respectivement d'épaisseur 4 mm et 1,6 mm,
- environ 11 W si le film 14 est remplacé par de l'air de 4 mm (en utilisant alors un ou des espaceurs et/ou un scellement périphérique), ou environ 5 W par de l'air de 2 mm d'épaisseur (2 mm d'air équivalant à 9 mm de PVB) et du verre de 3,15 mm.

Dans ces conditions, la permittivité électrique εᵣ vaut :
- environ 4 si le film 14 est le PVB de 5 mm d'épaisseur,
- environ 3,5 si le film 14 est l'EVA de 3,8 mm d'épaisseur,

Dans ces conditions tan δ vaut :
- environ 0,06 si le film 14 est un PVB d'au moins 5 mm d'épaisseur pour limiter la capacité C,
- environ 0,018 si le film 14 est l'EVA de 3,8 mm d'épaisseur,
- environ 0,008 si le film 14 est le PC associé à l'EVA respectivement d'épaisseur 4 mm et 1,6 mm,
- environ 0,005 si le film 14 est remplacé par de l'air de 4 mm (2 mm d'air équivalant à 9 mm de PVB), ou environ 0,012 par de l'air de 2 mm d'épaisseur et du verre de 3,15 mm.

La tension U aux bornes du diélectrique intercalaire 14 est égale à V0-V1.

Du côté de la face externe 31, on place une résine appropriée ou un film plastique transparent 15, par exemple en PVB, ou EVA de 1,5 mm d'épaisseur qui sert d'intercalaire de feuilletage avec un substrat verrier par exemple une feuille de verre 17 de 3,15 mm d'épaisseur ou alternativement un support plastique rigide et épais.

Pour une surface d'électrode 5 de 0, 2 m² et une puissance de 100 W, le courant de fuite mesuré en disposant un objet métallique continu de même surface sur la feuille de verre 17 d'épaisseur 3,15 mm est d'environ 0,65 mA (valeur pic).

Si l'objet métallique est de surface inférieure, le courant de fuite en est réduit proportionnellement.

Dans une première variante relative à la sécurisation, V1 est à une masse prévue dans un point du circuit de l'alimentation électrique de la lampe auquel cas le courant de fuite est nul.

Dans une deuxième variante relative à la sécurisation, l'électrode 5 et le conducteur électrique de protection 41 ne sont pas reliés. Par exemple le conducteur 41 reste à V1 tandis que la deuxième électrode est reliée au secteur soit 220 V et 50 Hz ou à une masse.

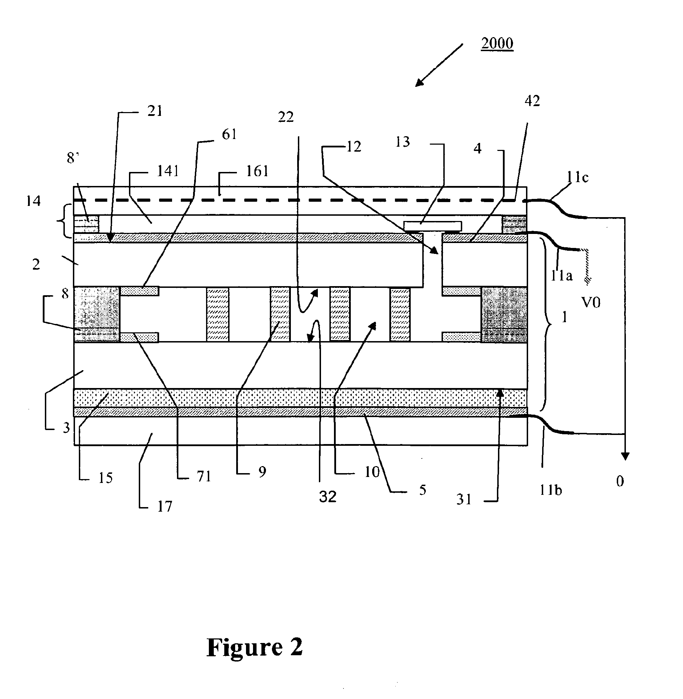

Dans la forme de réalisation de la figure 2, la structure 2000 de la lampe reprend fondamentalement la structure de la figure 1 mis à part :
- le conducteur électrique de protection 42 qui est une grille dans un verre armé 161, l'épaisseur du verre au-dessus de l'électrode étant par exemple de 3 mm environ,
- l'agencement de l'électrode 5, laquelle est disposée sur un film par exemple en PET associé à un film de PVB ou EVA, pour assembler le verre 17 de 3,85 mm d'épaisseur,
- le matériau photoluminescent 61, 71 opaque disposé uniquement en bordure pour un éclairage différencié.

L'électrode 5 et le conducteur 42 sont en outre reliés à la masse. Le diélectrique intercalaire 14 comprend un gaz tel que de l'air ou de l'azote 141 de 2 mm d'épaisseur (entre un scellement périphérique 8') et les 3 mm du verre. La tension U aux bornes du diélectrique intercalaire 14 est égale à V0.

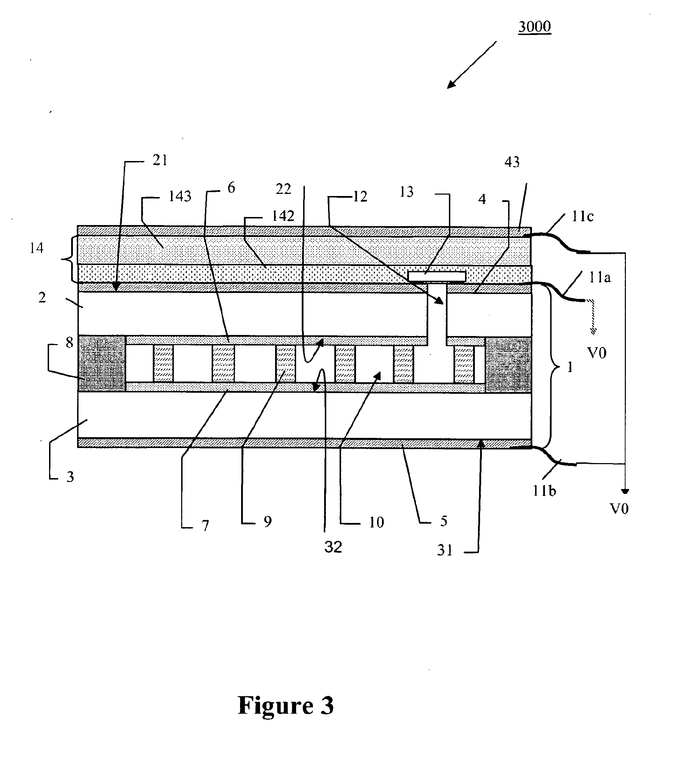

Dans la forme de réalisation de la figure 3, la structure 3000 de la lampe reprend fondamentalement la structure de la figure 1 mis à part :
- la disposition du conducteur électrique de protection 43, recouvrant le diélectrique intercalaire 14, ce conducteur 43 pouvant en outre aussi être protégé par un film adhésif par exemple par un polyuréthane et un polycarbonate,
- le diélectrique 14 comprend une feuille d'EVA 142 de 1,6 mm sous une feuille de PC 143 de 4 mm,
- l'absence d'un contre verre de feuilletage et d'un film plastique intercalaire au-dessus de l'électrode 5.

L'électrode 5 et le conducteur électrique 43 étant reliés à une masse, le conducteur électrique 43 est un blindage. La tension U aux bornes du diélectrique intercalaire 14 est égale à V0.

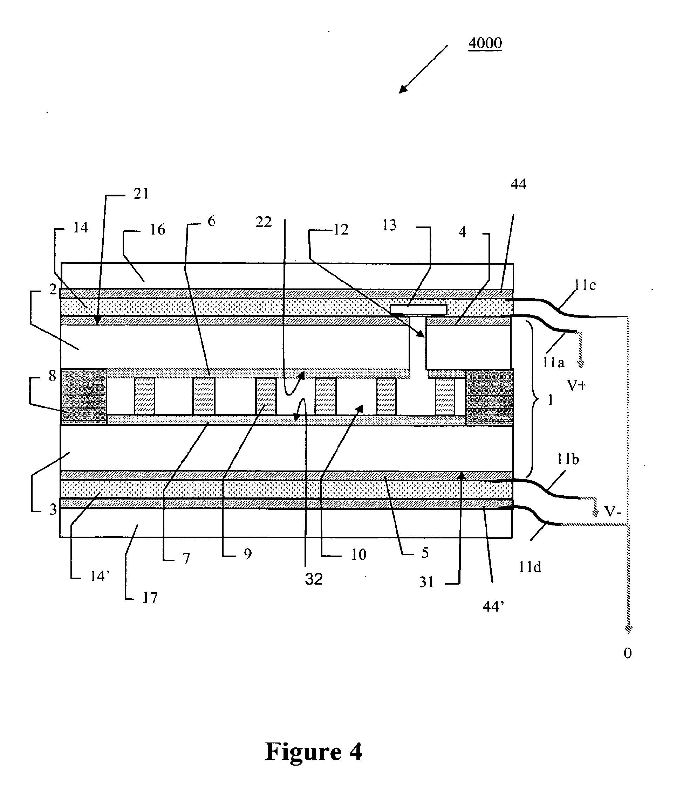

Dans la forme de réalisation de la figure 4, la structure 4000 de la lampe reprend fondamentalement la structure de la figure 1 mis à part l'électrode 4 qui est à un potentiel V+ de l'ordre de 300 V et l'électrode 5 qui est à un potentiel de signe opposé V- de l'ordre de 700 V, pour une fréquence f0 de 50 KHz. Aussi on utilise deux conducteurs électriques de protection 44, 44', sous forme de couches électroconductrices continues et transparentes. Les deux conducteurs électriques de protection 44, 44' sont reliés à une masse du circuit de l'alimentation de la lampe pour éviter tout courant de fuite.

Le diélectrique intercalaire est alors en deux parties 14, 14' par exemple sous forme de feuilles de PVB par exemple de 2,5 mm d'épaisseur chacune ou des autres variantes de films déjà précitées. La puissance consommée P_{d} correspond à la somme des puissances aux bornes des deux parties 14, 14'. Les tensions U aux bornes des deux parties 14, 14' du diélectrique intercalaire sont égales à V+ et à -V-.

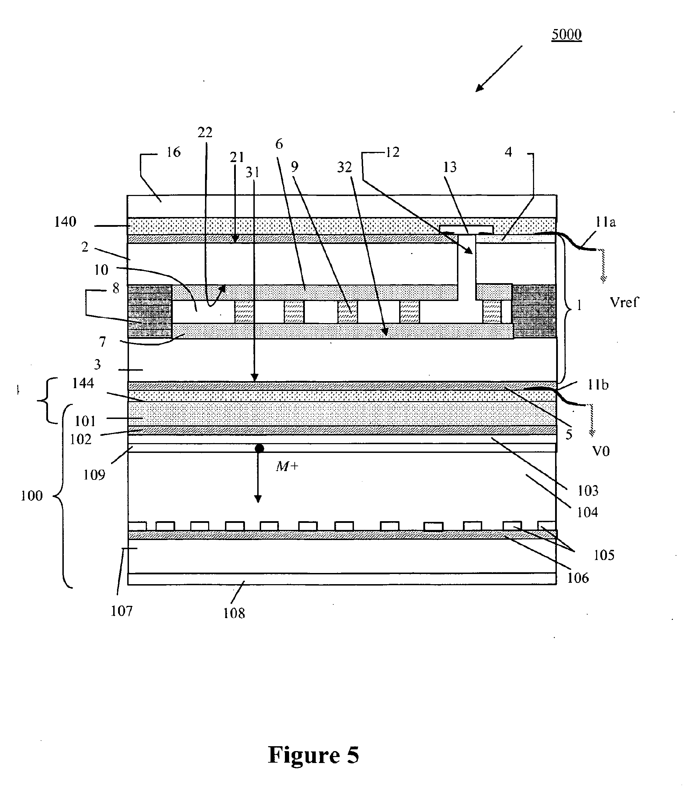

Dans la forme de réalisation de la figure 5, la structure 5000 de la lampe reprend fondamentalement la structure de la figure 1.

L'électrode 5 est à un potentiel V0 de l'ordre de 1 kV, et une haute fréquence f0 de 40 à 50 kHz. L'électrode 4 est à un potentiel Vref de l'ordre de 220 V, et une fréquence f de 50 Hz et est feuilletée par un intercalaire de feuilletage 140.

Au-dessus de l'électrode 5, est assemblé un miroir électrochimique réversible 100 qui sécurise la structure.

Ce miroir électrochimique réversible comportant successivement :
- un diélectrique intercalaire 14 formé d'un EVA 144 et d'un PC 101,
- une première électrode 102,
- des premiers sites de nucléation 103, par exemple en platine,
- un électrolyte 104, par exemple mélange d'AgI et de LiBr dans un solvant gamma-butyrolactone,
- des deuxièmes sites de nucléation 105, par exemple en platine,
- une deuxième électrode 106,
- un substrat transparent, de préférence une feuille de verre 107, ou en variante un substrat plastique transparent ou tout substrat composite, souple ou rigide,
- optionnellement une couche basse émissive ou de contrôle solaire 108.

Les premiers sites de nucléation 103 sont rapprochés les uns des autres tandis que les deuxièmes sites de nucléation 105 sont éloignés les uns des autres. Des atomes M+ d'un matériau métallique, de préférence de l'argent, sont susceptibles de former par électrodéposition une surface réfléchissante 109 ou semi réfléchissante (état intermédiaire) sur les premiers sites 103, ou une surface sensiblement transparente (non représentée), sous forme d'îlots conducteurs, sur les deuxièmes sites 105.

On prévoit des moyens de réglage (non représentés) du niveau de réflexion de la surface réfléchissante, en ajustant la tension, en mesurant la quantité de courant ou par des mesures de résistance électrique.

L'électrode 102 ou 106 étant reliée à une masse (non représentée), le courant de fuite du côté de l'électrode 5 est donc nul. La tension U aux bornes du diélectrique intercalaire 14 est égale à V0-Vref.

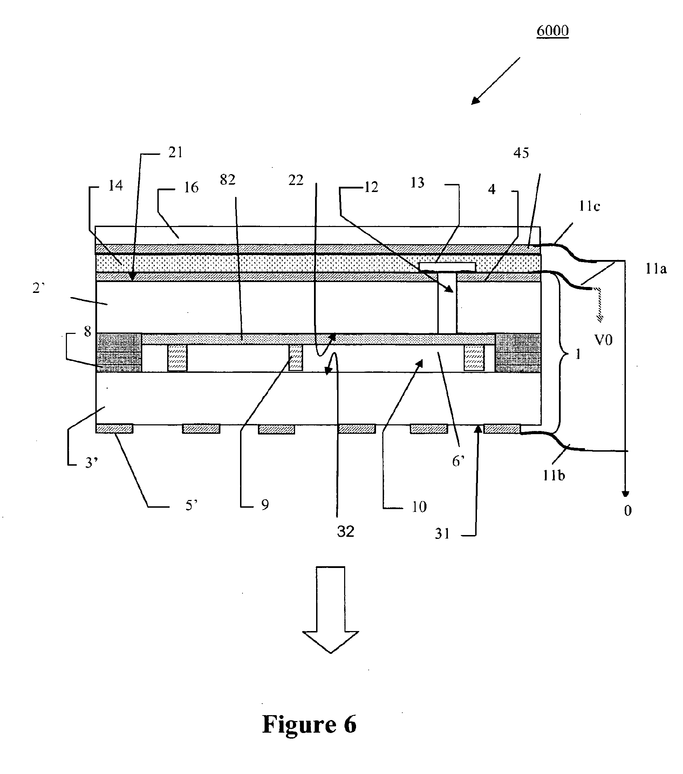

Dans la forme de réalisation de la figure 6, la structure 6000 de la lampe reprend en partie la structure de la figure 1 sauf qu'il s'agit d'une lampe UV 6000 avec une seule face émettrice depuis la face 31 (symbolisé par la flèche épaisse) avec comme source UV un gaz plasmagène 6' dans l'espace interne 10.

Les parois 2',3' étant choisies transparentes à l'UV, on place un réflecteur UV 82 telle que l'alumine sur la face interne de la paroi 2'.

L'électrode 5' est sous forme de bandes (ou de fils et/ou d'un grille) pour laisser passer le rayonnement UV, et, n'étant pas recouverte, est reliée à la masse comme le conducteur de protection 45. La tension U aux bornes du diélectrique intercalaire 14 est égale à V0.

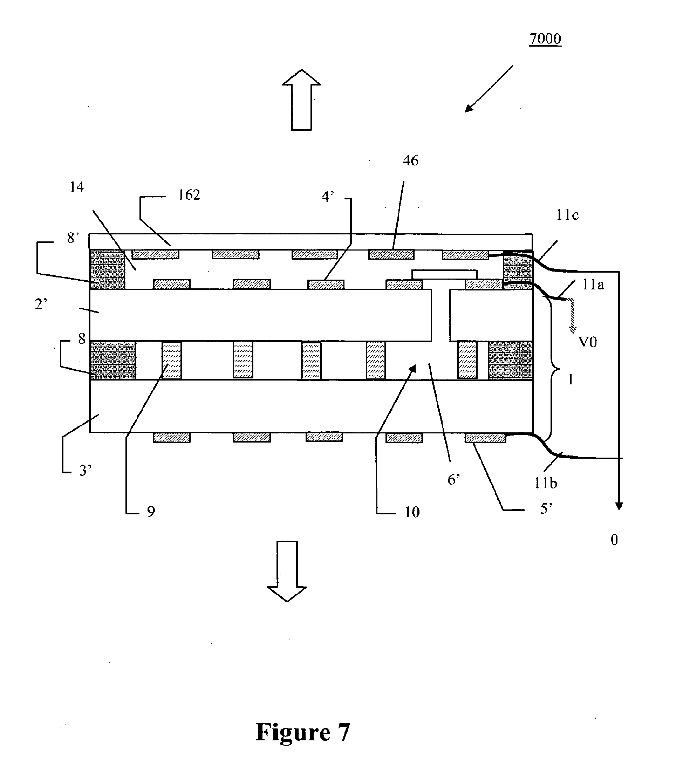

Dans la forme de réalisation de la figure 7, la structure 7000 de la lampe reprend en partie la structure de la figure 1 sauf qu'il s'agit d'une lampe UV avec deux faces émettrices (symbolisé par les deux flèches épaisses) ayant un gaz plasmagène 6' dans l'espace interne 10 comme source UV.

Les parois 2',3' sont choisies transparentes à l'UV comme le diélectrique couvrant 162. Le conducteur de protection 46 et les électrodes 4', 5' sont par exemple sous forme de bandes (ou de fils et/ou de grille) pour laisser passer le rayonnement UV et le diélectrique intercalaire 14 est de l'azote avec un scellement périphérique 8'. La tension U aux bornes du diélectrique intercalaire 14 est égale à V0.

L'électrode 5', n'étant pas recouverte, est reliée à la masse comme le conducteur de protection 46.

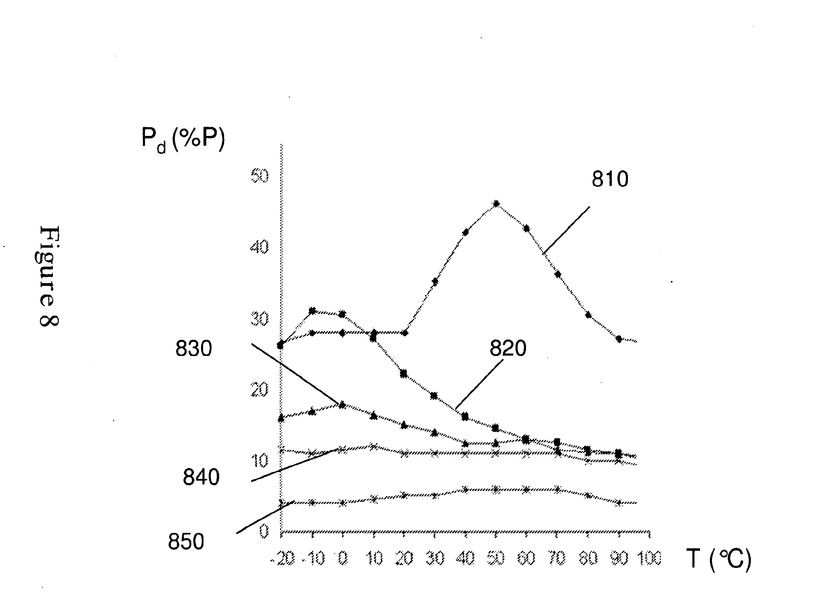

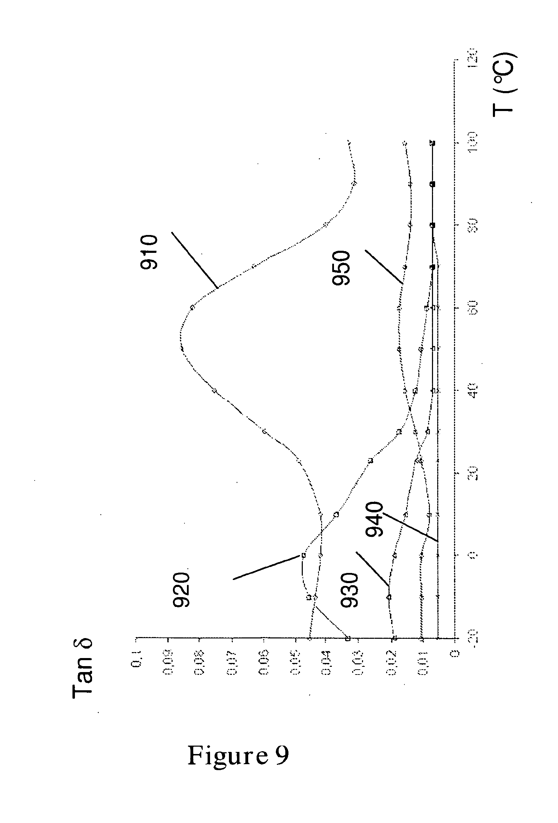

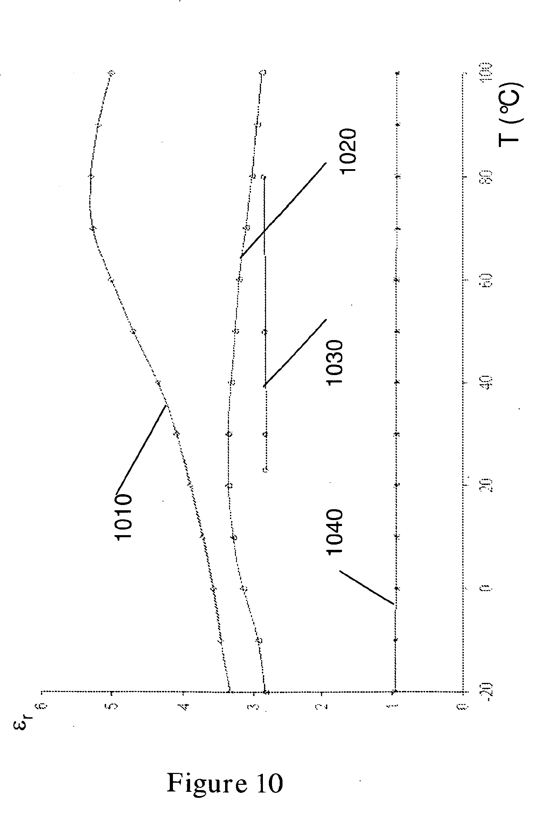

Les figures 8 à 10 montrent respectivement :
- l'évolution de P_{d} (courbes 810 à 850) en fonction de la température de surface de la structure 1000,
- l'évolution de tanδ (courbes 910 à 950) en fonction de la température de surface de la structure 1000,
- et l'évolution de la permittivité électrique εᵣ (courbes 1010 à 1040) en fonction de la température de surface de la structure 1000,
ceci pour les diélectriques intercalaires suivants :
- un PVB de 5 mm d'épaisseur (courbes 810, 910, 1010)
- un EVA de 3,8 mm d'épaisseur (courbes 820, 920, 1020)
- un PC seul (courbe 1030) ou associé à un EVA respectivement d'épaisseur 4 mm et 1,6 mm (courbes 830, 930)
- de l'air seul de 4 mm (courbes 840, 940, 1040)
- de l'air de 2 mm d'épaisseur et du verre de 3,15 mm (courbes 850, 950).

On observe que l'EVA a un meilleur comportement que le PVB, notamment au-delà de 30°C où la puissance consommée P_{d} se situe entre 10 et 20 W pour 100 W.

La combinaison EVA et PC, encore plus avantageuse, permet d'obtenir une puissance P_{d} limitée (entre 10 et 17 W pour 100 W) et relativement constante avec la température.

D'un point de vue électrique, l'air et la combinaison air et verre sont également avantageux de par la faible puissance consommée P_{d} (inférieure à 5 W pour 100 W) et leur grande stabilité avec la température. Même si l'angle de pertes de la combinaison air+verre est relativement important, la puissance consommée à ses bornes est faible car la valeur de capacité est la plus faible des isolants testés.

Les exemples qui viennent d'être décrits ne limitent nullement l'invention.

Toutes les dissymétries et variantes d'assemblage sont possibles tant pour les électrodes (choix du matériau, de la forme, choix d'agencement sur du verre ou sur du plastique, etc) que pour le ou les conducteurs électriques de protection (choix du matériau, de la forme, choix d'agencement sur du verre ou sur du plastique, etc) ou pour le ou les diélectriques intercalaires (choix des matériau(x), choix d'épaisseur(s), de la forme, notamment continue pleine surface ou trouée ou encore discontinue, ...).

La structure lumineuse 1000 à 5000 peut faire partie intégrante d'un double vitrage par exemple en remplaçant l'un des verres du double vitrage. Dans cette configuration, le conducteur électrique peut être en outre sur le verre restant du double vitrage.

Dans le cas d'une activation par un gaz plasmagène, une distribution différenciée du photoluminescent dans certaines zones permet de ne convertir l'énergie du plasma en rayonnements visibles que dans les zones en question, afin de constituer des zones lumineuses (elles-mêmes opaques ou transparentes en fonction de la nature du photoluminescent) et des zones en permanence transparentes juxtaposées.

La zone lumineuse peut aussi former un réseau des motifs géométriques (lignes, plots, ronds, carrés ou toute autre forme) et les espacements entre motifs et/ou les tailles de motifs peuvent être variables.

Les parois peuvent être de toute forme : un contour peut être polygonal, concave ou convexe, notamment carré ou rectangulaire, ou courbe, de rayon de courbure constant ou variable, notamment rond ou ovale.

Les parois peuvent être planes ou bombées, de préférence maintenues à distance constante.

Les parois peuvent être des substrats verriers, à effet optique, notamment colorées, décorées, structurées, diffusantes....

La structure peut être scellée par voie minérale (fritte de verre par exemple), à l'aide d'un matériau sensiblement transparent (verre ...) ou avec une colle (silicone).

## Revendications

1. Structure lumineuse et/ou UV c'est-à-dire ultraviolet (1000 à 7000) plane comportant :
- des première et deuxième parois diélectriques (2, 2', 3, 3') avec des faces principales planes en regard délimitant un espace interne (10) comprenant une source lumineuse et/ou d'UV (6, 7, 71, 6'), l'espace interne comprenant un gaz plasmagène émettant dans le visible et/ou l'UV (6') et éventuellement un luminophore (6, 7) émettant dans le visible,
- des première et deuxième électrodes (4, 4', 5, 5') pour la source lumineuse et/ou UV, non coplanaires, générant des lignes de champ électrique avec au moins une composante perpendiculaire aux première et deuxième électrodes, les première et deuxième électrodes étant respectivement associées aux première et deuxième parois (2,2', 3,3'), c'est-à-dire
- la première électrode est une couche continue ou discontinue, notamment en bandes, associée à une face principale externe ou interne de la première paroi ou la première électrode est sous forme de grille de fils ou de fils parallèles incorporés au moins partiellement dans la première paroi, la première électrode (4, 4', 5, 5') étant alimentée par un signal électromagnétique haute fréquence de fréquence f₀,
et
- la deuxième électrode est une couche continue ou discontinue, notamment en bandes, associée à une face principale interne ou externe de la deuxième paroi ou la deuxième électrode est sous forme de grille de fils ou de fils parallèles incorporés au moins partiellement dans la deuxième paroi,
- la structure formant ainsi une lampe plane
**caractérisée en ce qu'**elle comporte, en recouvrement extérieur de la première électrode, un système de sécurité électrique qui comprend un conducteur électrique (41 à 46, 102) dit de protection, séparé de la première électrode par un diélectrique (14, 14'), dit intercalaire, l'intercalaire étant sensiblement plan, et le système de sécurité électrique étant de capacité C donnée, le conducteur électrique de protection (41 à 46, 102) étant une couche continue ou discontinue, notamment en bandes, ou est une grille (42) ou des fils parallèles entre eux, le système de sécurité électrique et la lampe plane formant un ensemble monolithique,
**en ce qu'elle** comporte une alimentation électrique du conducteur de protection avec une fréquence f à éventuellement avec un potentiel V donnés, la fréquence f à éventuellement le potentiel V étant ajustés de sorte que la valeur pic du courant de fuite extérieur est inférieure ou égale à 2 mA, si f est nulle, ou inférieure ou égale à 0,7 mA, si f est non nulle,
**en ce que** le diélectrique intercalaire est choisi de sorte que la puissance consommée P_{d} aux bornes du diélectrique intercalaire soit inférieure ou égale à 0,35 fois la puissance P fournie par l'alimentation électrique au moins à une température de surface de la structure choisie entre 25°C et 60°C,
P_{d} étant donnée par la formule suivante : *P_{d}* = 2π*ƒ*₀*CU*² sin(δ) dans laquelle δ est l'angle de pertes du diélectrique intercalaire, U est la tension aux bornes du diélectrique intercalaire,
**en ce que** le diélectrique intercalaire présente une valeur de tanδ inférieure ou égale à 0,06 pour la fréquence f₀ entre 1 et 100 kHz à ladite température de surface,
**et en ce que** le diélectrique intercalaire présente une permittivité relative εᵣ inférieure ou égale à 4,5 pour la fréquence f₀ entre 1 et 100 kHz à ladite température de surface.

2. Structure lumineuse et/ou UV (1000 à 7000) selon la revendication 1 **caractérisée en ce que** P_{d} est inférieure ou égale à 0,25P pour ladite température de surface et de préférence pour une gamme de températures de surface entre 30°C et 60°C.

3. Structure lumineuse et/ou UV (1000 à 7000) selon l'une des revendications 1 ou 2 **caractérisée en ce que** le diélectrique intercalaire présente une valeur de tanδ inférieure ou égale à 0,06 pour la fréquence f₀ entre 1 et 100 kHz à ladite température de surface et pour une gamme de températures entre 30°C et 60°C et/ou **en ce que** le diélectrique intercalaire présente une permittivité relative εᵣ inférieure ou égale à 4,5 pour la fréquence f₀ entre 1 et 100 kHz à ladite température de surface et pour une gamme de températures entre 30°C et 60°C.

4. Structure lumineuse et/ou UV (1000 à 7000) selon l'une des revendications 1 à 3 **caractérisée en ce que** le diélectrique intercalaire (14, 14') comprend l'un des éléments suivants:
- une feuille de verre formant éventuellement l'une des parois, et choisie parmi un verre silicosodocalcique avec moins de 0,05% de Fe III ou de Fe₂O₃" un verre borosilicate, une silice ou un quartz,
- un film de polymère choisi parmi un polyéthylène téréphtalate, un polyvinyl butyral, un polyuréthane, un polyéthylène, un polyéthylène naphtalate, un polychlorure de vinyle, un polyméthacrylate de méthyle, ces matériaux ayant une épaisseur minimale de 5 mm en configuration pleine surface,
- un éthylène-vinyl acétate, ayant une épaisseur minimale de 3 mm en configuration pleine surface, ou un polycarbonate notamment ayant une épaisseur minimale de 2 mm en configuration pleine surface,
- de l'air, d'épaisseur minimale 1 mm, ou un gaz neutre notamment l'azote, notamment d'épaisseur minimale de 2 mm,
- ou un empilement de plusieurs desdits éléments notamment:
- au moins deux films de polymère, notamment un éthylène-vinyl acétate et un polycarbonate,
- un gaz et au moins l'un desdits films de polymère tel que le polycarbonate et l'éthylène-vinyl acétate,
- ou un gaz et ladite feuille de verre,
- ou au moins un film de polymère et/ou une feuille de verre avec des ouvertures ou sous forme discontinue, notamment en bandes.

5. Structure lumineuse et/ou UV (1000 à 7000) selon l'une des revendications 1 à 4 **caractérisée en ce que** le diélectrique intercalaire (14, 14') est sensiblement ou globalement transparent dans le visible et/ou l'UV.

6. Structure lumineuse et/ou UV (1000 à 7000) selon l'une des revendications 1 à 5 **caractérisée en ce qu'**au moins l'une des électrodes et/ou le conducteur électrique (41 à 46, 102) est sensiblement ou globalement transparent dans le visible et/ou l'UV.

7. Structure lumineuse et/ou UV (1000, 3000 à 7000) selon l'une des revendications 1 à 6 **caractérisée en ce que** les première et deuxième électrodes (4, 5, 4', 5') sont au moins partiellement dans les première et deuxième parois ou sur les faces principales externes (21, 31) des parois, les parois étant des feuilles de verre (2, 2', 3, 3').

8. Structure lumineuse et/ou UV (2000 à 5000) selon l'une des revendications 1 à 7 **caractérisée en ce que** le potentiel V est à une masse.

9. Structure lumineuse et/ou UV (1000) selon l'une des revendications 1 à 7 **caractérisée en ce que** les électrodes (4, 5) sont disposées sur les faces principales externes (21, 31) des parois et le système de protection électrique comprend un autre diélectrique (16), dit couvrant, situé au-dessus du conducteur électrique (41), et le potentiel V est inférieur ou égal à 400 V, de préférence inférieur ou égal à 220 V et/ou la fréquence f est inférieure ou égale à 100 Hz, de préférence inférieure ou égale à 60 Hz.

10. Structure lumineuse et/ou UV (1000 à 3000, 6000, 7000) selon l'une des revendications 1 à 9 **caractérisée en ce que** la deuxième électrode (5) est reliée électriquement audit conducteur électrique de protection.

11. Structure lumineuse et/ou UV (4000) selon l'une des revendications 1 à 9 **caractérisée en ce que** la deuxième électrode (5) étant alimentée ou susceptible d'être alimentée par un signal électromagnétique haute fréquence (V-), et la structure lumineuse comporte un autre système de sécurité électrique (44') associé à ladite deuxième électrode et **en ce que** le diélectrique intercalaire est dédoublé c'est-à-dire composé de deux parties (14, 14') chacune en recouvrement extérieur d'une électrode distincte (4, 5), la puissance P_{d} correspondant alors à la somme des puissances aux bornes des deux parties.

12. Structure lumineuse et/ou UV (5000) selon l'une des revendications 1 à 11 **caractérisée en ce que** le système de protection électrique fait partie d'un dispositif électrocommandable, de préférence à propriétés optiques variables.

13. Structure lumineuse et/ou UV (6000) selon l'une des revendications 1 à 12 **caractérisée en ce qu'**elle comprend un matériau réfléchissant un rayonnement visible et/ou UV (82), couvrant partiellement ou entièrement une face principale interne ou externe d'une des parois (2'), par exemple en alumine (82) ou en aluminium et formant notamment l'une des électrodes.

14. Structure lumineuse et/ou UV (1000 à 7000) selon l'une des revendications 1 à 13 **caractérisée en ce que** la structure choisie lumineuse forme un élément décoratif ou architectural, un élément à fonction d'affichage, tels que des luminaires plans, des parois lumineuses notamment suspendues, des dalles lumineuses, un rétroéclairage d'écrans d'affichage, une fenêtre éclairante de bâtiment ou de moyens de locomotion notamment une fenêtre de train, un hublot de cabine de bateau ou d'avions, un toit, une vitre latérale une lunette arrière ou de pare-brise de véhicules industriels, un vitrage, une cloison interne entre des pièces ou entre deux compartiments de moyens de locomotion terrestres, aériens ou maritimes, un vitrine, un mobilier urbain, une façade de meuble, ou **en ce que** la structure choisie UV sert pour l'esthétique, comme lampe à bronzer, le biomédical, l'électronique ou pour l'alimentaire, pour la décontamination d'eau du robinet, d'eau potable de piscine, d'air, le séchage UV, la polymérisation.

## Claims

1. Flat light-emitting and/or UV (i.e. ultraviolet)-emitting structure (1000 to 7000) comprising:
- first and second dielectric walls (2, 2', 3, 3') with plane main faces facing each other and defining an internal space (10) containing a light and/or UV source (6, 7, 71, 6'); the internal space containing a plasma gas (6') emitting in the visible and/or UV and optionally a phosphor (6, 7) emitting in the visible,
- first and second, non-coplanar electrodes (4, 4', 5, 5') for the light and/or UV source, which generate electric field lines with at least one component perpendicular to the first and second electrodes, the first and second electrodes being associated with the first and second walls (2, 2', 3, 3') respectively, that is to say
- the first electrode is a continuous or discontinuous layer, especially in strip form, associated with an external or internal main face of the first wall or the first electrode is in the form of a grid of wires or parallel wires incorporated at least partly in the first wall, the first electrode (4, 4', 5, 5') being supplied by a high-frequency electromagnetic signal of frequency fo,
and
- the second electrode is a continuous or discontinuous layer, especially in strip form, associated with an internal or external main face of the second wall or the second electrode is in the form of a grid of wires or parallel wires incorporated at least partly in the second wall,
- the structure thus forming a flat lamp, **characterized in that** it includes, as outer cover for the first electrode, an electrical safety system that comprises an electrical conductor (41 to 46, 102) called protective conductor, separated from the first electrode by a dielectric (14, 14'), called interlayer dielectric, the interlayer being substantially flat, and the electrical safety system being of given capacitance C, the electrical protective conductor (41 to 46, 102) being a continuous or discontinuous layer, especially in strip form, or being a grid (42) or mutually parallel wires, the electrical safety system and the flat lamp forming a monolithic assembly,
**in that** it includes an electrical power supply for the protective conductor with a given frequency f and optionally with a given potential V, the frequency f and optionally the potential V being adjusted so that the peak value of the external leakage current is equal to 2 mA or less if f is zero, or 0.7 mA or less if f is non-zero,
**in that** the interlayer dielectric is chosen in such a way that the power consumed P_{d} at the terminals of the interlayer dielectric is equal to or less than 0.35 times the power P delivered by the electrical power supply at least at a surface temperature of the structure chosen between 25°C and 60°C,
P_{d} being given by the following formula: P_{d} = 2πƒ₀CU²sinδ in which δ is the loss angle of the interlayer dielectric and U is the voltage across the terminals of the interlayer dielectric,
**in that** the interlayer dielectric has a tanδ equal to or less than 0.06 for the frequency f₀ between 1 and 100 kHz at said surface temperature,
**and in that** the interlayer dielectric has a relative permittivity εᵣ equal to or less than 4.5 for the frequency f₀ between 1 and 100 kHz at said surface temperature.

2. Light-emitting and/or UV-emitting structure (1000 to 7000) according to Claim 1, **characterized in that** P_{d} is equal to or less than 0.25 P for said surface temperature and preferably for a surface temperature range between 30°C and 60°C.

3. Light-emitting and/or UV-emitting structure (1000 to 7000) according to either of Claims 1 and 2, **characterized in that** the interlayer dielectric has a tanδ equal to or less than 0.06 for the frequency f₀ between 1 and 100 kHz at said surface temperature and for a temperature range between 30°C and 60°C and/or **in that** the interlayer dielectric has a relative permittivity εᵣ equal to or less than 4.5 for the frequency f₀ between 1 and 100 kHz at said surface temperature and for a temperature range between 30°C and 60°C.

4. Light-emitting and/or UV-emitting structure (1000 to 7000) according to one of Claims 1 to 3, **characterized in that** the interlayer dielectric (14, 14') comprises one of the following elements:
- a sheet of glass optionally forming one of the walls and chosen from a soda-lime-silica glass with at least 0.05% Fe^{III} or Fe₂O₃, a borosilicate glass, a silica or a quartz;
- a film of polymer chosen from a polyethylene terephthalate, a polyvinyl butyral, a polyurethane, a polyethylene, a polyethylene naphthalate, a polyvinyl chloride and a polymethyl methacrylate, these materials having a minimum thickness of 5 mm in the full-area configuration;
- an ethylene/vinyl acetate, having a minimum thickness of 3 mm in the full-area configuration, or a polycarbonate having for example a minimum thickness of 2 mm in the full-area configuration;
- air, with a minimum thickness of 1 mm, or an inert gas, particularly nitrogen, for example with a minimum thickness of 2 mm;
- or a stack of several of said elements, for example:
- at least two polymer films, for example an ethylene/vinyl acetate film and a polycarbonate film;
- a gas and at least one of said polymer films, such as the polycarbonate film and the ethylene/vinyl acetate film;
- or a gas and said glass sheet;
- or at least one polymer film and/or a glass sheet with apertures or in discontinuous form, especially in strip form.

5. Light-emitting and/or W-emitting structure (1000 to 7000) according to one of Claims 1 to 4, **characterized in that** the interlayer dielectric (14, 14') is substantially or completely transparent in the visible and/or the UV.

6. Light-emitting and/or UV-emitting structure (1000 to 7000) according to one of Claims 1 to 5, **characterized in that** at least one of the electrodes and/or the electrical conductor (41 to 46, 102) is substantially or completely transparent in the visible and/or the UV.

7. Light-emitting and/or UV-emitting structure (1000, 3000 to 7000) according to one of Claims 1 to 6, **characterized in that** the first and second electrodes (4, 5, 4', 5') are at least partly in the first and second walls or on the external main faces (21, 31) of the walls, the walls being glass sheets (2, 2', 3, 3').

8. Light-emitting and/or UV-emitting structure (2000 to 5000) according to one of Claims 1 to 7, **characterized in that** the potential V is earth potential.

9. Light-emitting and/or UV-emitting structure (1000) according to one of Claims 1 to 7, **characterized in that** the electrodes (4, 5) are placed on the external main faces (21, 31) of the walls, and the protective electrical system includes another dielectric (16) called covering dielectric lying on top of the electrical conductor (41), and the potential V is 400 V or less, preferably 220 V or less and/or the frequency f is 100 Hz or less, preferably 60 Hz or less.

10. Light-emitting and/or UV-emitting structure (1000 to 3000, 6000, 7000) according to any one of Claims 1 to 9, **characterized in that** the second electrode (5) is electrically connected to said protective electrical conductor.

11. Light-emitting and/or UV-emitting structure (4000) according to one of Claims 1 to 9, **characterized in that** the second electrode (5) is supplied or capable of being supplied by a high-frequency electromagnetic signal (V-), the light-emitting structure includes another electrical safety system (44') associated with said second electrode and **in that** the interlayer dielectric is duplicated, that is to say made up of two parts (14, 14') each as external cover for a separate electrode (4, 5), the power P_{d} then corresponding to the sum of the powers at the terminals of the two parts.

12. Light-emitting and/or UV-emitting structure (5000) according to one of Claims 1 to 11, **characterized in that** the electrical protection system forms part of an electrically controllable device, preferably one having variable optical properties.

13. Light-emitting and/or W-emitting structure (6000) according to one of Claims 1 to 12, **characterized in that** it includes a material (82) that reflects visible and/or UV radiation, partly or entirely covering an internal or external main face of one of the walls (2'), for example alumina (82) or aluminium, and forming in particular one of the electrodes.

14. Light-emitting and/or UV-emitting structure (1000 to 7000) according to one of Claims 1 to 13, **characterized in that** the light-emitting structure chosen forms a decorative or architectural element, an element having a display function, such as flat luminaires, luminous walls, especially suspended walls, luminous tiles, display screen backlighting, an illuminating window for buildings or means of locomotion, for example a train window or a ship or aircraft cabin window, a roof, side window, rear window or windscreen of industrial vehicles, glazing, an internal partition between two rooms or between two compartments of land, air or maritime means of locomotion, a display case or shop window, urban furniture, a building façade, or **in that** the UV-emitting structure chosen serves for the beauty field, such as a tanning lamp, the biomedical field, the electronics field or the food field, for decontaminating air, tap water, drinking water or swimming pool water, for UV drying or for UV curing.

## Patentansprüche

1. Flache Leucht- und/oder UV(Ultraviolett)-Struktur (1000 bis 7000), die aufweist:
- erste und zweite dielektrische Wände (2, 2', 3, 3') mit einander gegenüberliegenden, flachen, einen Innenraum (10) begrenzenden Hauptwänden, die eine Leucht- und/oder UV-Quelle (6, 7, 71, 6') enthalten, wobei der Innenraum ein Plasmagas, das im sichtbaren und/oder UV-Bereich (6') emittiert, und ggf. einen Luminophor (6, 7) enthält, der im sichtbaren Bereich emittiert,
- nicht koplanare erste und zweite Elektroden (4, 4', 5, 5') für die Leucht- und/oder UV-Quelle, die elektrische Feldlinien mit mindestens einer Komponente lotrecht zu der ersten und der zweiten Elektrode erzeugen, wobei die erste und die zweite Elektrode der ersten bzw. der zweiten Wand (2, 2', 3, 3') zugeordnet sind, d.h.
- die erste Elektrode eine kontinuierliche oder diskontinuierliche Schicht ist, insbesondere in Streifen, die einer äußeren oder inneren Hauptseite der ersten Wand zugeordnet ist, oder die erste Elektrode in Form eines Drahtgitters oder von parallelen Drähten vorliegt, die zumindest teilweise in die erste Wand eingebettet sind, wobei die erste Elektrode (4, 4', 5, 5') mit einem elektromagnetischen Hochfrequenzsignal der Frequenz f₀ gespeist wird,
und
- die zweite Elektrode eine kontinuierliche oder diskontinuierliche Schicht ist, insbesondere in Streifen, die einer inneren oder äußeren Hauptseite der zweiten Wand zugeordnet ist, oder die zweite Elektrode in Form eines Drahtgitters oder von parallelen Drähten vorliegt, die zumindest teilweise in die zweite Wand eingebettet sind,
- wobei die Struktur so eine flache Lampe bildet, **dadurch gekennzeichnet, dass** sie in äußerer Überdeckung der ersten Elektrode ein elektrisches Sicherheitssystem aufweist, das einen elektrischen Leiter (41 bis 46, 102), Schutzleiter genannt, enthält, der von der ersten Elektrode durch ein so genanntes Zwischenlage-Dielektrikum (14, 14') getrennt ist, wobei die Zwischenlage im Wesentlichen flach ist, und das elektrische Sicherheitssystem eine gegebene Kapazität C hat, wobei der elektrische Schutzleiter (41 bis 46, 102) eine kontinuierliche oder diskontinuierliche Schicht, insbesondere in Streifen, ist, oder aus einem Gitter (42) oder aus zueinander parallelen Drähten besteht, wobei das elektrische Sicherheitssystem und die flache Lampe eine monolithische Einheit bilden,
dass sie eine Stromversorgung des Schutzleiters mit einer gegebenen Frequenz f und ggf. mit einem gegebenen Potential V aufweist, wobei die Frequenz f und ggf. das Potential V so eingestellt sind, dass der Spitzenwert des äußeren Leckstroms geringer als oder gleich 2 mA, wenn f Null ist, oder geringer als oder gleich 0,7 mA ist, wenn f ungleich Null ist,
dass das Zwischenlage-Dielektrikum so gewählt wird, dass die an den Klemmen des Zwischenlage-Dielektrikums verbrauchte Leistung P_{d} geringer als oder gleich 0,35 Mal die Leistung P ist, die von der Stromversorgung mindestens bei einer Oberflächentemperatur der Struktur geliefert wird, die zwischen 25°C und 60°C gewählt wird, wobei P_{d} durch die folgende Formel angegeben wird:
P_{d} = 2πƒ₀CU²sin (δ) , in der δ der Verlustwinkel des Zwischenlage-Dielektrikums, U die Spannung an den Klemmen des Zwischenlage-Dielektrikums ist,
dass das Zwischenlage-Dielektrikum einen Wert von tanδ geringer als oder gleich 0,06 für die Frequenz f₀ zwischen 1 und 100 kHz bei der Oberflächentemperatur hat,
und dass das Zwischenlage-Dielektrikum eine relative Dielektrizitätskonstante εᵣ geringer als oder gleich 4,5 für die Frequenz f₀ zwischen 1 und 100 kHz bei der Oberflächentemperatur hat.

2. Leucht- und/oder UV-Struktur (1000 bis 7000) nach Anspruch 1, **dadurch gekennzeichnet, dass** P_{d} geringer als oder gleich 0,25P für die Oberflächentemperatur, und vorzugsweise für einen Oberflächentemperaturbereich zwischen 30°C und 60°C, ist.

3. Leucht- und/oder UV-Struktur (1000 bis 7000) nach einem der Ansprüche 1 oder 2, **dadurch gekennzeichnet, dass** das Zwischenlage-Dielektrikum einen Wert von tanδ geringer als oder gleich 0,06 für die Frequenz f₀ zwischen 1 und 100 kHz bei der Oberflächentemperatur und für einen Temperaturbereich zwischen 30°C und 60°C hat, und/oder dass das Zwischenlage-Dielektrikum eine relative Dielektrizitätskonstante εᵣ geringer als oder gleich 4,5 für die Frequenz f₀ zwischen 1 und 100 kHz bei der Oberflächentemperatur und für einen Temperaturbereich zwischen 30°C und 60°C hat.

4. Leucht- und/oder UV-Struktur (1000 bis 7000) nach einem der Ansprüche 1 bis 3, **dadurch gekennzeichnet, dass** das Zwischenlage-Dielektrikum (14, 14') eines der folgenden Elemente enthält:
- eine Glasfolie, die ggf. eine der Wände bildet und ausgewählt wird aus einem Soda-Kalk-Silikat-Glas mit weniger als 0,05% Fe III oder Fe₂O₃, einem Borsilikatglas, einem Silikat oder einem Quarz,
- einen Polymerfilm, ausgewählt aus Polyethylenterephthalat, Polyvinylbutyral, Polyurethan, Polyethylen, Polyethylennaphtalat, Polyvinylchlorid, Polymethylmethacrylat, wobei diese Materialien eine Mindestdicke von 5 mm in vollflächiger Konfiguration haben,
- ein Ethylen-Vinyl-Acetat, das eine Mindestdicke von 3 mm in vollflächiger Konfiguration hat, oder insbesondere ein Polycarbonat, das eine Mindestdicke von 2 mm in vollflächiger Konfiguration hat,
- Luft einer Mindestdicke von 1 mm, oder ein neutrales Gas, insbesondere Stickstoff, insbesondere mit einer Mindestdicke von 2 mm,
- oder eine Stapelung mehrerer der Elemente, insbesondere:
- mindestens zwei Polymerfilme, insbesondere ein Ethylen-Vinyl-Acetat und ein Polycarbonat,
- ein Gas und mindestens einer der Polymerfilme wie Polycarbonat und Ethylen-Vinyl-Acetat,
- oder ein Gas und die Glasfolie,
- oder mindestens ein Polymerfilm und/oder eine Glasfolie mit Öffnungen oder in diskontinuierlicher Form, insbesondere in Streifen.

5. Leucht- und/oder UV-Struktur (1000 bis 7000) nach einem der Ansprüche 1 bis 4, **dadurch gekennzeichnet, dass** das Zwischenlage-Dielektrikum (14, 14') im Wesentlichen oder global im sichtbaren und/oder UV-Bereich transparent ist.

6. Leucht- und/oder UV-Struktur (1000 bis 7000) nach einem der Ansprüche 1 bis 5, **dadurch gekennzeichnet, dass** mindestens eine der Elektroden und/oder der elektrische Leiter (41 bis 46, 102) im Wesentlichen oder global im sichtbaren und/oder UV-Bereich transparent ist.

7. Leucht- und/oder UV-Struktur (1000, 3000 bis 7000) nach einem der Ansprüche 1 bis 6, **dadurch gekennzeichnet, dass** die erste und die zweite Elektrode (4, 5, 4', 5') sich zumindest teilweise in der ersten und zweiten Wand oder auf den äußeren Hauptseiten (21, 31) der Wände befinden, wobei die Wände Glasfolien (2, 2', 3, 3') sind.

8. Leucht- und/oder UV-Struktur (2000 bis 5000) nach einem der Ansprüche 1 bis 7, **dadurch gekennzeichnet, dass** das Potential V an einer Masse liegt.

9. Leucht- und/oder UV-Struktur (1000) nach einem der Ansprüche 1 bis 7, **dadurch gekennzeichnet, dass** die Elektroden (4, 5) auf den äußeren Hauptseiten (21, 31) der Wände angeordnet sind, und das elektrische Schutzsystem ein weiteres Dielektrikum (16), bedeckend genannt, enthält, das sich über dem elektrischen Leiter (41) befindet, und das Potential V geringer als oder gleich 400 V, vorzugsweise geringer als oder gleich 220 V, und/oder die Frequenz f geringer als oder gleich 100 Hz, vorzugsweise geringer als oder gleich 60 Hz ist.

10. Leucht- und/oder UV-Struktur (1000 bis 3000, 6000, 7000) nach einem der Ansprüche 1 bis 9, **dadurch gekennzeichnet, dass** die zweite Elektrode (5) elektrisch mit dem elektrischen Schutzleiter verbunden ist.

11. Leucht- und/oder UV-Struktur (4000) nach einem der Ansprüche 1 bis 9, **dadurch gekennzeichnet, dass** die zweite Elektrode (5) von einem elektromagnetischen Hochfrequenzsignal (V-) gespeist wird oder gespeist werden kann, und die Leuchtstruktur ein weiteres elektrisches Sicherheitssystem (44') aufweist, das der zweiten Elektrode zugeordnet ist, und dass das Zwischenlage-Dielektrikum doppelt ist, d.h. aus zwei Teilen (14, 14') besteht, die je außen eine unterschiedliche Elektrode (4, 5) überdecken, wobei die Leistung P_{d} dann der Summe der Leistungen an den Klemmen der zwei Teile entspricht.

12. Leucht- und/oder UV-Struktur (5000) nach einem der Ansprüche 1 bis 11, **dadurch gekennzeichnet, dass** das elektrische Schutzsystem Teil einer elektrisch steuerbaren Vorrichtung ist, vorzugsweise mit variablen optischen Eigenschaften.

13. Leucht- und/oder UV-Struktur (6000) nach einem der Ansprüche 1 bis 12, **dadurch gekennzeichnet, dass** sie ein eine sichtbare und/oder UV-Strahlung reflektierendes Material (82) enthält, das eine innere oder äußere Hauptseite einer der Wände (2') teilweise oder ganz bedeckt, zum Beispiel aus Aluminiumoxid (82) oder aus Aluminium, und das insbesondere eine der Elektroden bildet.

14. Leucht- und/oder UV-Struktur (1000 bis 7000) nach einem der Ansprüche 1 bis 13, **dadurch gekennzeichnet, dass** die gewählte Leuchtstruktur ein dekoratives oder architektonisches Element, ein Element mit Anzeigefunktion, wie flache Beleuchtungskörper, Leuchtwände, insbesondere hängende, leuchtende Platten, eine Hintergrundbeleuchtung von Anzeigebildschirmen, ein Leuchtfenster eines Gebäudes oder von fahrenden Einrichtungen wie insbesondere ein Zugfenster, ein Bullauge einer Schiffskabine oder von Flugzeugen, ein Dach, ein Seitenfenster, ein Heckfenster oder eine Windschutzscheibe von industriellen Fahrzeugen, eine Verglasung, eine Innentrennwand zwischen Räumen oder zwischen zwei Abteilen von Land-, Luft-, oder Wasserfahrzeugen, eine Vitrine, eine Straßeneinrichtung, eine Möbelfassade bildet, oder dass die gewählte UV-Struktur der Ästhetik, wie eine Bräunungslampe, der Biomedizin, der Elektronik, oder für den Lebensmittelbereich, für die Entkeimung des Leitungswassers, des Schwimmbad-Trinkwassers, von Luft, der UV-Trocknung, der Polymerisierung dient.
